# EUROPÄISCHE PATENTANMELDUNG

(11) **EP 4 725 619 A1**
(43) Veröffentlichungstag der Anmeldung: **15.04.2026**
(21) Anmeldenummer: 24205294.2
(22) Anmeldetag: 08.10.2024
(51) Int. Cl.: B07B 1/46, F16J 15/02, B07B 1/38

(54) **DICHTUNG FÜR EINEN SIEBRAHMEN**

(71) Anmelder: Bühler AG, 9240 Uzwil (CH)
(72) Erfinder: Meile, Andreas, 9533 Kirchberg (CH); Hausammann, Kevin, 9320 Arbon (CH); Dörig, Daniel, 8547 Gachnang (CH)
(74) Vertreter: Hepp Wenger Ryffel AG

(57) **Zusammenfassung**

Die vorliegende Erfindung betrifft eine Dichtung (1) für einen Siebrahmen (4), umfassend im Querschnitt einen mittleren Abschnitt (1a) und an den seitlichen Enden des mittleren Abschnitts (1a) angeordnete Seitenabschnitte (1b, 1c), wobei sich die Seitenabschnitte (1b, 1c) in gleicher Richtung von dem mittleren Abschnitt (1a) erstrecken und der mittlere Abschnitt (1a) und die Seitenabschnitte (1b, 1c) einen Raum (1d) zur Aufnahme eines Körpers ausbilden, und wobei die Dichtung (1) elastisch verformbar ist. Die vorliegende Erfindung betrifft weiterhin einen Siebrahmen (4), umfassend eine derartige Dichtung (1), und ein Sieb, vorzugsweise einen Plansichter, umfassend mindestens einen, vorzugsweise mindestens zwei übereinander angeordnete, derartige Siebrahmen (4).

## Beschreibung

Die vorliegende Erfindung betrifft eine Dichtung für einen Siebrahmen, eine die Dichtung enthaltende Dichtanordnung, einen damit ausgestatteten Siebrahmen und Plansichter.

Siebe finden eine breite Anwendung in Industrieprozessen, bei welchen eine Trennung oder Sortierung von Materialien nach ihrer Partikelgröße erforderlich ist. Als Beispiel können Plansichter genannt werden.

Ein Plansichter ist ein kastenförmiges Gerät mit großen Siebelementen im Innenbereich (dem sogenannten Produktraum) und wird zum Sieben von schrot-, grieß- und mehlartigen Produkten in der Mühlenindustrie und zum Sortieren von verschiedenen Getreidesorten und dergleichen verwendet. Die Siebelemente sind als Stapel übereinander angeordneter Siebrahmen bereitgestellt, wobei die Maschenweite der in den Siebrahmen angeordneten Siebgeweben über den gesamten Siebstapel hinweg variabel gewählt werden kann, um das Produkt in den entmischten Korngrößenbereichen zu sortieren. Zur Durchführung der Siebbewegung wird der Plansichter durch einen Unwuchtantrieb in eine gleichmäßig oszillierende Bewegung versetzt. Konventionell ist dieser Antrieb in einem separaten Antriebsmodul vorgesehen.

In jedem Siebrahmen ist ein Siebgewebe angeordnet (beispielsweise von einer Seite eingelegt), wobei jeder Siebrahmen weiterhin eine Bodenplatte, einen Innenraum zwischen Siebgewebe und Bodenplatte, einen Feingutaustrag sowie auf der Bodenplatte frei bewegliche Reinigungselemente aufweist, wie dies beispielsweise in der DE 197 06 601 C1, EP-0 584 302 B1, EP-0 330 846 A1 oder US-3,565,251 beschrieben ist.

Innerhalb des Siebstapels wandert das zu sortierende Material durch die übereinander angeordneten Siebrahmen. Es ist erforderlich, dass die Siebrahmen dichtend übereinander angeordnet sind, um ein seitliches Austreten des sortierenden Materials aus dem Siebstapel zu verhindern.

Herkömmlich wird dies dadurch erreicht, dass auf beiden Seiten jedes Siebrahmens eine Dichtung aus Filzstreifen aufgebracht ist. Diese sind jedoch unhygienisch (da sie Feuchtigkeit und zu sortierendes Material aufnehmen), lösen sich leicht ab und verschieben sich in ihrer Position unter dem Druck der Siebrahmen. Dadurch vermischen sich Fraktionen des zu sortierenden Materials. Zusätzlich problematisch ist, dass man die Dichtungen erst nach dem Ausstapeln der Siebrahmen kontrollieren kann und etwaige Qualitätsprobleme erst nachträglich feststellt.

Bekannt ist weiterhin, Siebrahmen über eine Labyrinthdichtung zu verbinden, wie dies beispielsweise in der US-2008/257792 A1 beschrieben ist. Diese Variante ist aber mit den Nachteilen verbunden, dass aufgrund von Reibung und Unterdruck die Demontage erschwert wird und eine Labyrinthdichtung mehr Dichtungshöhe in Anspruch nimmt, wodurch weniger Siebrahmen in einem Plansichter angeordnet werden können.

Es war die Aufgabe der vorliegenden Erfindung, eine Dichtung für Siebrahmen bereitzustellen, welche nicht unter den vorstehend genannten Problemen des Stands der Technik leidet.

Diese Aufgabe wird durch die vorliegende Erfindung gelöst.

Im Detail betrifft die vorliegende Erfindung eine Dichtung für einen Siebrahmen, umfassend im Querschnitt einen mittleren Abschnitt und an den seitlichen Enden des mittleren Abschnitts angeordnete Seitenabschnitte, wobei sich die Seitenabschnitte in gleicher Richtung von dem mittleren Abschnitt erstrecken und der mittlere Abschnitt und die Seitenabschnitte einen Raum zur Aufnahme eines Körpers ausbilden, und wobei die Dichtung elastisch verformbar ist.

Mit der vorliegenden Erfindung wird die Abdichtung zwischen den zahlreichen Siebrahmen eines Siebstapels in einem Sieb wie einem Plansichter sichergestellt.

Die erfindungsgemässe Dichtung zeichnet sich dadurch aus, dass sie formschlüssig mit einem Siebrahmen verbunden und somit fixiert werden kann. Dies ermöglicht eine zuverlässige Positionierung der Dichtung, welche auch während des Betriebs beibehalten wird und beispielsweise keine Positionsverschiebung erfährt. Andererseits kann die Dichtung auf einfache Weise vom Siebrahmen entfernt und beispielsweise durch eine neue Dichtung ersetzt werden.

Die formschlüssige Verbindbarkeit der erfindungsgemässen Dichtung mit einem Siebrahmen wird dadurch erreicht, dass die Dichtung elastisch verformbar ist. Wird ein für die formschlüssige Verbindung vorgesehenes Profil eines Siebrahmens in den dafür vorgesehenen Raum der erfindungsgemässen Dichtung eingesteckt, kann die Dichtung der Profilform entsprechend verformt werden, wodurch die gewünschte Fixierung an dem Siebrahmen erreicht wird.

Die erfindungsgemässe Dichtung ist aus einem elastisch verformbaren Material gefertigt. Vorzugsweise handelt es sich um einen für Lebensmittel zugelassenem Werkstoff. Erfindungsgemäss bevorzugt ist die Dichtung aus einem thermoplastischen Elastomer, vorzugsweise einem thermoplastischen Polyurethan-Elastomer gefertigt. Thermoplastische Elastomere sind bekannte und kommerziell erhältliche Materialien, welche sich bei Raumtemperatur wie ein klassisches Elastomer verhalten, bei Erwärmung aber thermoplastisch verformbar sind.

Die erfindungsgemässe Dichtung hat eine längliche schienenartige Form. Vorzugsweise weist die erfindungsgemässe Dichtung eine Länge auf, welche der Länge eines Aussenprofils eines herkömmlichen Siebrahmens für einen Plansichter entspricht.

Die erfindungsgemässe Dichtung ist einstückig ausgebildet und kann beispielsweise durch ein bekanntes Extrusionsverfahren hergestellt werden.

Die erfindungsgemässe Dichtung umfasst im Querschnitt einen mittleren Abschnitt und an den seitlichen Enden des mittleren Abschnitts angeordnete Seitenabschnitte, wobei sich die Seitenabschnitte in gleicher Richtung von dem mittleren Abschnitt erstrecken und der mittlere Abschnitt und die Seitenabschnitte einen Raum zur Aufnahme eines Körpers ausbilden.

Die erfindungsgemässe Dichtung ist vorzugsweise in einem ersten, entspannten Zustand im Querschnitt etwa U-förmig, wobei sich die Seitenabschnitte im Querschnitt vom mittleren Abschnitt aus nach oben erstrecken.

Die Dimension des Raums zur Aufnahme eines Körpers wird verkleinert, indem die Seitenabschnitte in den Raum zur Aufnahme eines Körpers hinein bewegt werden. Auf diese Weise kann ein in diesem Raum befindlicher Körper formschlüssig fixiert werden.

Vorzugsweise handelt es sich bei dem Körper um ein Profil, welches an einem Siebrahmen angeordnet ist. Wird dieses Profil in den vorstehend beschriebenen Raum der erfindungsgemässen Dichtung gebracht, beispielsweise indem die Dichtung auf das Profil aufgesteckt wird, kann die formschlüssige Fixierung des Profils durch Bewegen der Seitenabschnitte der Dichtung auf das Profil realisiert werden. Das Hineinbewegen der Seitenabschnitte in den vorstehend beschriebenen Raum der erfindungsgemässen Dichtung wird dadurch unterstützt, dass durch das eingeführte Profil auf den mittleren Abschnitt von oben her (durch den Raum zur Aufnahme eines Körpers) Druck ausgeübt werden kann.

Gemäss einer erfindungsgemäss bevorzugten Ausgestaltung umfasst der mittlere Abschnitt der Dichtung im Querschnitt an seinen beiden äusseren Bereichen (an denen die Seitenabschnitte angeordnet sind) jeweils eine Auflagefläche. Zwischen diesen Auflagebereichen (den äusseren Bereichen mit den Auflageflächen) ist ein zentraler Bereich des mittleren Abschnitts angeordnet. Der zentrale Bereich ist zur Realisierung eines Übergangs zu einem Abstosskanal eines Siebrahmens beziehungsweise zur Kompensation gröberer Maschenweiten vorgesehen. Vorzugsweise nimmt der zentrale Bereich im Querschnitt der Dichtung 40 bis 70%, bevorzugt 50 bis 60% der Breite des mittleren Abschnitts ein, wobei die beiden Auflageflächen jeweils die Hälfte der verbleibenden Breite des mittleren Abschnitts (also jeweils 15 bis 30%, vorzugsweise 20 bis 25%) einnehmen. Typischerweise beträgt die Breite des mittleren Abschnitts 10 bis 25 mm, vorzugsweise 15 bis 20 mm.

Dieser zentrale Bereich ist vorzugsweise gegenüber den Auflagebereichen im Querschnitt verdickt, sodass er im Vergleich zu den Auflagebereichen weiter in den Raum zur Aufnahme eines Körpers ragt. Noch bevorzugter ragt der zentrale Bereich im Vergleich zu den Auflagebereichen im Querschnitt auch weiter auf der von diesem Raum abgewandten Seite der Dichtung aus dieser heraus.

Auf diese Weise sind bei dieser Ausführungsform zwischen dem zentralen Bereich des mittleren Abschnitts und den Seitenabschnitten taschenförmige Auflagebereiche ausgebildet.

Bei dieser Ausführungsform ist es bevorzugt, ein Profil in den Raum der Dichtung zur Aufnahme eines Körpers einzuführen, das im Querschnitt eine Form aufweist, welche der Querschnittsform des Raums der Dichtung zur Aufnahme eines Körpers entspricht. Mit anderen Worten ist ein Profil bevorzugt, welches ein Mitteilteil mit von diesem schräg nach unten abstehenden Unterteilen aufweist. Diese schräg nach unten abstehenden Unterteile können in die taschenförmige Auflagebereiche der erfindungsgemässen Dichtung eingebracht werden, während das Mitteilteil des Profils auf dem zentralen Bereich des mittleren Abschnitts der Dichtung aufliegt. Die Seitenabschnitte der Dichtung werden in den Raum der Dichtung zur Aufnahme eines Körpers bewegt und verklemmen die schräg nach unten abstehenden Unterteile des Profils.

Wird das Profil in den Raum der Dichtung zur Aufnahme eines Körpers eingeführt, kann zusätzlich ein Druck auf die Auflagebereiche ausgeübt werden, wobei der Druck von den Auflagebereichen des mittleren Abschnitts der erfindungsgemässen Dichtung aufgenommen wird und die vorstehend beschriebene elastische Verformung der Dichtung unterstützt.

Diese besondere Ausgestaltung der erfindungsgemässen Dichtung erlaubt einen gewissen Hub und somit eine zuverlässige Abdichtung unterschiedlicher Profile. Dies ist vorteilhaft, wenn die Dichtung auf einem Siebrahmen über die Siebgewebe hinaus auch auf der Oberkante des Abstosskanals des Siebrahmens angeordnet ist und auch diesen abdichten soll. Zudem variiert bei herkömmlichen Siebrahmen die Gewebedicke.

Gemäss einer besonders bevorzugten Ausführungsform der vorliegenden Erfindung umfasst mindestens ein Abschnitt der Dichtung, ausgewählt aus der Gruppe bestehend aus dem mittleren Abschnitt und den Seitenabschnitten, einen hohlkörperförmigen Abschnitt. Dies erleichtert die vorstehend beschriebene Hubbewegung beziehungsweise Angleichung an die Form des eingeführten Profils. Vorzugsweise befindet sich der hohlkörperförmige Abschnitt im zentralen Bereich des mittleren Abschnitts der Dichtung, sowie besonders bevorzugt auch in einem oder beiden der Seitenabschnitte der Dichtung. Besonders bevorzugt sind die hohlkörperförmigen Abschnitte entlüftbar ausgestaltet.

Die formschlüssige Fixierung eines Profils im Raum der Dichtung zur Aufnahme eines Körpers kann vorzugsweise noch mehr verbessert werden, indem das Profil mit oberen Seitenteilen ausgestattet ist, welche mit den Seitenabschnitten der Dichtung interagieren können. Vorzugsweise weist das Profil hierbei einen T-förmigen Querschnitt mit schräg nach unten abstehenden Unterteilen auf, wobei die seitlichen Enden des oberen breiten Abschnitts des T-förmigen Querschnitts Elemente aufweisen können, welche in entsprechend geformte taschenartige Abschnitte im oberen Bereich der Seitenabschnitte der Dichtung eingeführt werden können. Auf diese Weise können die Seitenabschnitte an ihren oberen Enden am Profil fixiert werden.

Den endgültigen, verspannten Zustand nimmt die erfindungsgemässe Dichtung ein, wenn sie zusammen mit dem Profil, an welchem sie formschlüssig fixiert ist, vertikal verspannt wird. Dies kann dadurch erfolgen, dass die erfindungsgemässe Dichtung an einem Profil eines Siebrahmens wie vorstehend beschrieben fixiert und anschliessend mit dem Siebrahmen in das Sichterabteil eines Plansichters geschoben und vertikal verspannt wird. Hierbei wird das Gewicht und die Kraft der zusätzlichen Verpressung des Siebstapels von den Auflagebereichen des mittleren Abschnitts der erfindungsgemässen Dichtung aufgenommen.

Die erfindungsgemässe Dichtung ist für einen Siebrahmen vorgesehen, wie er beispielsweise in Plansichtern eingesetzt wird. Ein derartiger Siebrahmen hat üblicherweise eine rechteckige Form. Um alle Aussenprofile eines solchen Siebrahmens dichtend abzuschliessen, ist es gemäss der vorliegenden Erfindung vorgesehen, mehrere erfindungsgemässe Dichtungen zu einer Dichtanordnung zu verbinden.

Die vorliegende Erfindung betrifft somit auch eine Dichtanordnung, dadurch gekennzeichnet, dass mindestens zwei erfindungsgemässe Dichtungen über ein Eckstück miteinander verbunden sind.

Wie vorstehend beschrieben hat die erfindungsgemässe Dichtung eine längliche schienenartige Form und weist vorzugsweise eine Länge auf, welche der Länge eines Aussenprofils eines herkömmlichen Siebrahmens für einen Plansichter entspricht. Um mehr als ein Aussenprofil eines herkömmlichen Siebrahmens abzudichten, können mehrere erfindungsgemässe Dichtungen über ein Eckstück miteinander verbunden werden.

Das Eckstück ist vorzugsweise ein mit Spritzguss gefertigtes Kunststoffelement, in welchem zwei erfindungsgemässe Dichtungen derart angeordnet werden können, dass die Dichtungen im angeordneten Zustand einen rechten Winkel einschliessen. Die Anordnung der Dichtungen in dem Eckstück kann auf herkömmliche Weise erfolgen, beispielsweise durch Verkleben oder durch lösbare Befestigungsmittel wie Schrauben.

Erfindungsgemäss bevorzugt können vier erfindungsgemässe Dichtungen über Eckstücke unter Ausbildung eines Rahmens miteinander verbunden werden. Die resultierende Dichtanordnung kann zum vollständigen Abdichten einer Seite eines Siebrahmens verwendet werden.

Sämtliche in dieser Dichtanordnung befindlichen Dichtungen weisen vorzugsweise eine Länge auf, welche einer Länge eines Aussenprofils des Siebrahmens entspricht, auf welcher sie angeordnet werden sollen.

Der erfindungsgemäße Siebrahmen weist einen allgemeinen Aufbau auf, der einem Siebrahmen eines herkömmlichen Plansichters ähnlich ist. Mit anderen Worten umfasst der Siebrahmen Außenprofile, welche die äußeren Begrenzungen des Siebrahmens bilden und einen inneren Bereich umschließen. Gemäß einer bevorzugten Ausführungsform umfasst der Siebrahmen vier Außenprofile, die so miteinander verbunden sind, dass sie ein Rechteck oder ein Quadrat bilden. In diesem Rechteck oder Quadrat sind ein oder mehrere Innenprofile vorgesehen. Vorzugsweise erstrecken sich die Innenprofile von einem Außenprofil zu einem anderen, gegenüberliegenden Außenprofil.

Gemäß einer bevorzugten Ausführungsform der vorliegenden Erfindung kann in mindestens einem, vorzugsweise einem, der Außenprofile ein zusätzlicher Materialauslass vorgesehen sein.

Gemäß einer bevorzugten Ausführungsform der vorliegenden Erfindung ist in dem von den Außenprofilen umgebenen Bereich ein Seitenauslass (Abstosskanal) vorgesehen. Der Seitenauslass ist ein Abschnitt, der von dem übrigen, von den Außenprofilen umgebenen Innenbereich getrennt ist und typischerweise eine rechteckige Form aufweist.

Gemäß einer bevorzugten Ausführungsform der vorliegenden Erfindung sind die Innenprofile innerhalb des von den Außenprofilen gebildeten Rechtecks oder Quadrats so angeordnet, dass in dem verbleibenden, von den Außenprofilen umschlossenen Innenbereich, d.h. dem Bereich ohne den seitlichen Auslass, rechteckige oder quadratische Bodenflächen gebildet werden. Mit anderen Worten sind die Innenprofile so angeordnet, dass sie die verbleibende, von den Außenprofilen umschlossene Fläche in kleinere rechteckige oder quadratische Bodenflächen unterteilen. Vorzugsweise haben die kleineren rechteckigen oder quadratischen Bodenflächen die gleiche Fläche.

Gemäß einer bevorzugten Ausführungsform der vorliegenden Erfindung sind 2-12 sich kreuzende Innenprofile vorgesehen, die die von den Außenprofilen umschlossene Restfläche in eine entsprechende Anzahl kleinerer rechteckiger oder quadratischer Bodenflächen unterteilen, z.B. 4-49 Bodenflächen.

Auf dem oder den Aussenprofilen, auf denen eine erfindungsgemässe Dichtung angeordnet werden soll, befindet sich ein vorstehend bereits beschriebene Profil. Vorzugsweise ist dieses Profil aus rostfreiem Stahl gefertigt. Vorzugsweise befindet sich auf jedem Aussenprofil, auf deren vom Bodenbereich abgewandten Kante, ein derartiges Profil, welches sich besonders bevorzugt über die gesamte Länge des Aussenprofils erstreckt.

Die vorliegende Erfindung betrifft somit auch einen Siebrahmen, umfassend eine vorstehend beschriebene erfindungsgemässe Dichtung oder eine vorstehend beschriebene erfindungsgemässe Dichtanordnung.

Bei dem erfindungsgemässen Siebrahmen ist eine vorstehend beschriebene erfindungsgemässe Dichtung oder eine vorstehend beschriebene erfindungsgemässe Dichtanordnung auf mindestens einem Aussenprofil des Siebrahmens angeordnet. Im Fall einer vorstehend beschriebenen erfindungsgemässen Dichtanordnung sind mindestens zwei Aussenprofile des Siebrahmens mit der Dichtanordnung versehen. Besonders bevorzugt ist beim erfindungsgemässen Siebrahmen eine vorstehend beschriebene erfindungsgemässe Dichtanordnung auf allen Aussenprofilen einer Seite des Siebrahmens angeordnet.

Gemäss der vorliegenden Erfindung zeichnet sich der Siebrahmen dadurch aus, dass die Dichtung oder die Dichtanordnung auf einem oder mehreren Profilen angeordnet ist, welche auf mindestens einem Aussenprofil des Siebrahmens bereitgestellt ist. Dieses mindestens eine Profil kann einstückig auf dem Siebrahmen bereitgestellt sein, oder alternativ mit dem Siebrahmen fest verbunden sein (beispielsweise durch Verschweissen oder Vernieten, oder durch lösbare Befestigungsmittel wie Schrauben).

Wie vorstehend ausgeführt können die Siebrahmen in herkömmlichen Siebvorrichtungen, wie z.B. einem Plansichter, einer Reinigungsmaschine oder einer Getreidereinigungsmaschine verwendet werden.

Die vorliegende Erfindung betrifft somit auch ein Sieb, vorzugsweise Plansichter, umfassend mindestens einen, vorzugsweise mindestens zwei übereinander angeordnete, vorstehend beschriebene erfindungsgemässe Siebrahmen. Besonders bevorzugt ist der Einsatz in einem Plansichter einer Nahrungsmittel- oder Tierfuttermühle.

Derartige Plansichter sind bekannt und müssen hier nicht im Detail erläutert werden.

Die vorliegende Erfindung betrifft weiterhin ein Verfahren zur Montage einer vorstehend beschriebenen erfindungsgemässen Dichtung oder einer vorstehend beschriebenen erfindungsgemässen Dichtanordnung auf einem Siebrahmen, umfassend die Schritte:
a) Aufbringen der Dichtung oder der Dichtanordnung auf mindestens einem Aussenprofil des Siebrahmens, wobei sich die Dichtung oder die Dichtanordnung in einem ersten entspannten Zustand befindet,
b) elastische Verformung der Dichtung oder der Dichtanordnung zu einem zweiten gespannten Zustand.

Wie vorstehend beschrieben erfolgt Schritt a) dadurch, dass die betreffende Dichtung, beziehungsweise Dichtanordnung, auf ein Profil (oder im Fall einer Dichtanordnung auf mehreren Profilen) aufgebracht wird. Das Profil befindet sich auf einer freien Kante eines Aussenprofils des Siebrahmens. Das Aufbringen der Dichtung oder der Dichtanordnung kann manuell oder automatisiert erfolgen. In beiden Fällen wird die Dichtung oder die Dichtanordnung auf das Profil aufgebracht, und die Seitenabschnitte werden in den Raum der Dichtung zur Aufnahme eines Körpers bewegt, bis das Profil in diesem Raum formschlüssig fixiert ist.

Der Endzustand wird erreicht, indem in Schritt b) eine anschliessende Verspannung in einem Stapel aus mindestens zwei Siebrahmen durchgeführt wird.

Vorzugsweise führt die Dichtung oder die Dichtanordnung in Schritt b) eine Hubbewegung aus.

Die erfindungsgemässe Dichtung kann auf einfache Weise durch Umkehr des beschriebenen Verfahrens demontiert werden. Mit anderen Worten wird zunächst der Siebrahmen aus dem Siebstapel entnommen und die Dichtung dabei entspannt wird. Anschliessend kann die Dichtung von dem Profil entfernt werden, indem die Seitenabschnitte von dem Profil abgezogen werden.

Die vorliegende Erfindung wird nachstehend anhand von nicht einschränkenden Beispielen und Zeichnungen näher erläutert. Es zeigen:
- Fig. 1: eine Querschnittsansicht einer Ausführungsform der erfindungsgemässen Dichtung im entspannten, unmontierten Zustand
- Fig. 2: eine Querschnittsansicht einer Ausführungsform der erfindungsgemässen Dichtung im verspannten, montierten Endzustand
- Fig. 3: eine Profilansicht einer Ausführungsform der erfindungsgemässen Dichtung im entspannten, unmontierten Zustand
- Fig. 4: eine schematische Ansicht der Oberseite eines erfindungsgemässen Siebrahmens mit darauf angeordneter Dichtung
- Fig. 5: eine schematische Ansicht der Unterseite eines erfindungsgemässen Siebrahmens mit darauf angeordneter Dichtung

In den Zeichnungen bezeichnen gleiche Bezugszeichen dieselben Komponenten.

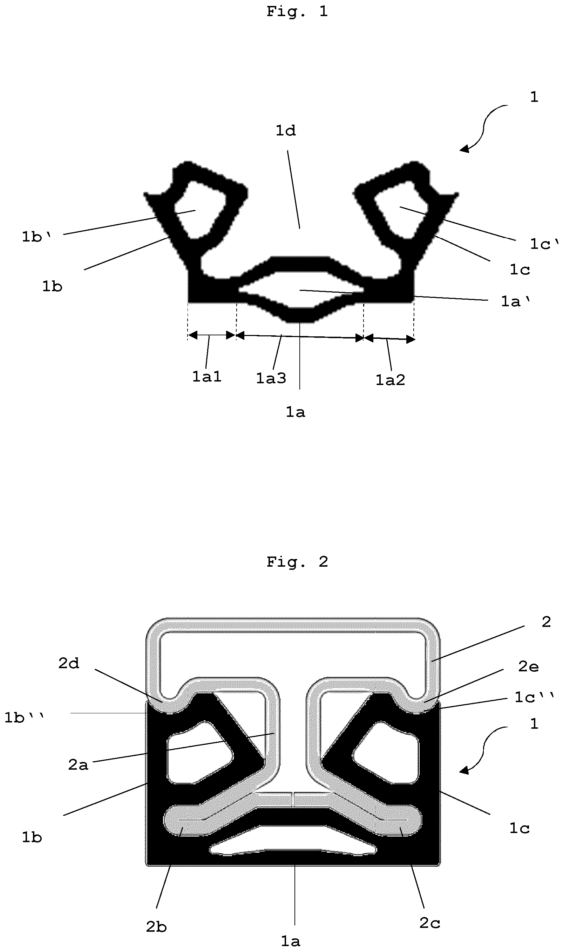

Fig. 1 ist eine Querschnittsansicht einer Ausführungsform der erfindungsgemässen Dichtung 1 im entspannten, unmontierten Zustand.

Die erfindungsgemässe Dichtung 1 ist einstückig ausgebildet und umfasst im Querschnitt einen mittleren Abschnitt 1a und an den seitlichen Enden des mittleren Abschnitts 1a angeordnete Seitenabschnitte 1b und 1c, wobei sich die Seitenabschnitte 1b und 1c in gleicher Richtung von dem mittleren Abschnitt 1a erstrecken und der mittlere Abschnitt 1a und die Seitenabschnitte 1b und 1c einen Raum 1d zur Aufnahme eines Körpers ausbilden. Die erfindungsgemässe Dichtung 1 ist in einem ersten, entspannten Zustand im Querschnitt etwa U-förmig.

Gemäss der in Fig. 1 gezeigten Ausgestaltung umfasst der mittlere Abschnitt 1a der Dichtung 1 im Querschnitt an seinen beiden äusseren Bereichen (an denen die Seitenabschnitte 1b und 1c angeordnet sind) jeweils eine Auflagefläche. Zwischen diesen Auflagebereichen 1a1 und 1a2 (den äusseren Bereichen mit den Auflageflächen) ist ein zentraler Bereich 1a3 des mittleren Abschnitts 1a angeordnet.

Gemäss der in Fig. 1 gezeigten Ausgestaltung umfassen der mittleren Abschnitt 1a und die Seitenabschnitte 1b und 1c jeweils einen hohlkörperförmigen Abschnitt 1a', 1b' und 1c'. Dies erleichtert die Hubbewegung beziehungsweise Angleichung der Dichtung an die Form eines eingeführten Profils 2.

Gemäss der in Fig. 1 gezeigten Ausgestaltung ist der zentrale Bereich 1a3 gegenüber den Auflagebereichen 1a1 und 1a2 im Querschnitt verdickt, sodass er im Vergleich zu den Auflagebereichen weiter in den Raum 1d zur Aufnahme eines Körpers sowie weiter auf der von diesem Raum 1d abgewandten Seite der Dichtung 1 aus dieser heraus ragt. Auf diese Weise sind zwischen dem zentralen Bereich 1a3 des mittleren Abschnitts 1a und den Seitenabschnitten 1b und 1c taschenförmige Auflagebereiche ausgebildet.

Fig. 2 ist eine Querschnittsansicht einer Ausführungsform der erfindungsgemässen Dichtung 1 im verspannten, montierten Endzustand.

In den Raum 1d zur Aufnahme eines Körpers wird ein Profil 2 eingeführt, welches an einem Siebrahmen (in Fig. 2 nicht gezeigt) angeordnet ist. Anschliessend wird der Raum 1d zur Aufnahme eines Körpers verkleinert, indem die Seitenabschnitte 1b und 1c in den Raum 1d zur Aufnahme eines Körpers hinein bewegt werden. Auf diese Weise kann das in diesem Raum 1d befindliche Profil 2 formschlüssig fixiert werden.

Bei der in Fig. 2 gezeigten Ausführungsform weist das Profil 2 im Querschnitt eine Form auf, welche der Querschnittsform des Raums 1d der Dichtung 1 zur Aufnahme eines Körpers entspricht. Das Profil 2 weist ein Mitteilteil 2a mit von diesem schräg nach unten abstehenden Unterteilen 2b, 2c auf. Diese schräg nach unten abstehenden Unterteile 2b, 2c können in die taschenförmige Auflagebereiche 1a1 und 1a2 der erfindungsgemässen Dichtung 1 eingebracht werden, während das Mitteilteil 2a des Profils 2 auf dem zentralen Bereich 1a3 des mittleren Abschnitts 1a der Dichtung 1 aufliegt. Die Seitenabschnitte 1b und 1c der Dichtung 1 werden in den Raum 1d der Dichtung 1 zur Aufnahme eines Körpers bewegt und verklemmen die schräg nach unten abstehenden Unterteile des Profils 2.

Bei der in Fig. 2 gezeigten Ausführungsform ist das Profil 2 mit Elementen 2d, 2e ausgestattet, welche mit den Seitenabschnitten 1b und 1c der Dichtung interagieren können. Das Profil 2 weist hierbei einen T-förmigen Querschnitt mit schräg nach unten abstehenden Unterteilen 2b, 2c auf, wobei die seitlichen Enden des oberen breiten Abschnitts des T-förmigen Querschnitts vorstehende Elemente 2d, 2e aufweisen, welche in entsprechend geformte taschenartige Abschnitte 1b'', 1c'' im oberen Bereich der Seitenabschnitte 1b, 1c der Dichtung 1 eingeführt werden können. Auf diese Weise können die Seitenabschnitte 1b, 1c an ihren oberen Enden am Profil 2 fixiert werden.

Bei der in Fig. 2 gezeigten Ausführungsform ist die erfindungsgemässe Dichtung 1 im endgültigen, verspannten Zustand gezeigt. In diesem Zustand ist die Dichtung 1 zusammen mit dem Profil 2 (des nicht gezeigten Siebrahmens), an welchem sie formschlüssig fixiert ist, vertikal verspannt. Dies kann dadurch erfolgen, dass die erfindungsgemässe Dichtung 1 an einem Profil 2 eines Siebrahmens fixiert und anschliessend mit dem Siebrahmen in das Sichterabteil eines Plansichters geschoben und vertikal verspannt wird. Hierbei wird das Gewicht und die Kraft der zusätzlichen Verpressung des Siebstapels von den Auflagebereichen 1a1 und 1a2 des mittleren Abschnitts 1a der erfindungsgemässen Dichtung 1 aufgenommen.

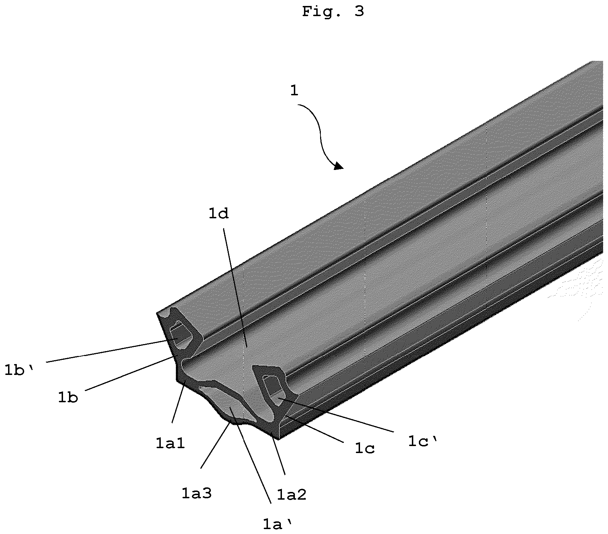

Fig. 3 ist eine Profilansicht einer Ausführungsform der erfindungsgemässen Dichtung 1 im entspannten, unmontierten Zustand.

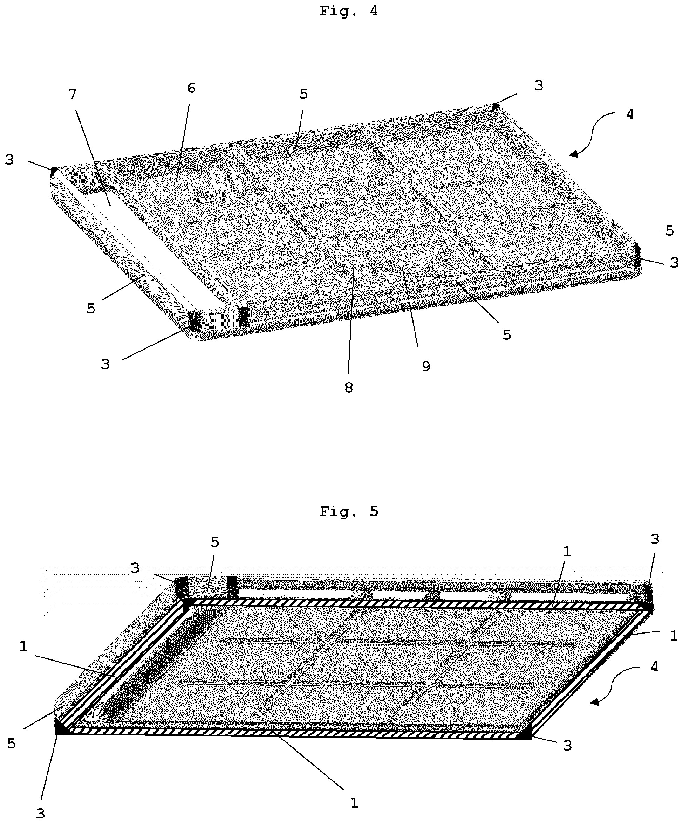

Fig. 4 ist eine schematische Ansicht der Oberseite eines erfindungsgemässen Siebrahmens 4 mit darauf angeordneter Dichtung 1 (wie in Fig. 5 gezeigt).

Der Siebrahmen 4 gemäss Fig. 4 umfasst vier Außenprofile 5, welche die äußeren Begrenzungen des Siebrahmens 4 bilden und einen inneren Bereich umschließen. In diesem inneren Bereich sind Innenprofile 8 vorgesehen, welche sich von einem Außenprofil 5 zu einem anderen, gegenüberliegenden Außenprofil 5 beziehungsweise zur Begrenzungswand des Seitenauslasses 7 erstrecken.

Weiterhin ist in dem von den Außenprofilen 5 umgebenen inneren Bereich ein Seitenauslass 7 (Abstosskanal) vorgesehen. Der Seitenauslass 7 ist ein Abschnitt, der von dem übrigen, von den Außenprofilen 5 umgebenen Innenbereich getrennt ist und typischerweise eine rechteckige Form aufweist.

Der Siebrahmen 4 gemäss Fig. 4 umfasst 4 sich kreuzende Innenprofile 8, welche den von den Außenprofilen 5 umschlossene inneren Bereich in neun Bodenflächen 5 unterteilen. In Fig. 4 sind weiterhin auf den Bodenflächen 6 frei bewegliche Reinigungselemente 9 gezeigt.

Auf den Aussenprofilen 5, jeweils auf deren von den Bodenflächen 6 abgewandten Kante, ist wie in Fig. 5 gezeigt die erfindungsgemässe Dichtung 1 auf (hier nicht gezeigten) Profilen 2 angeordnet.

Fig. 5 ist eine schematische Ansicht der Unterseite eines erfindungsgemässen Siebrahmens 4 mit darauf angeordneter Dichtung 1.

## Patentansprüche

1. Dichtung (1) für einen Siebrahmen (4), umfassend im Querschnitt einen mittleren Abschnitt (1a) und an den seitlichen Enden des mittleren Abschnitts (1a) angeordnete Seitenabschnitte (1b, 1c), wobei sich die Seitenabschnitte (1b, 1c) in gleicher Richtung von dem mittleren Abschnitt (1a) erstrecken und der mittlere Abschnitt (1a) und die Seitenabschnitte (1b, 1c) einen Raum (1d) zur Aufnahme eines Körpers ausbilden, und wobei die Dichtung (1) elastisch verformbar ist.

2. Dichtung nach Anspruch 1, **dadurch gekennzeichnet, dass** mindestens ein Abschnitt, ausgewählt aus der Gruppe bestehend aus dem mittleren Abschnitt (1a) und den Seitenabschnitten (1b, 1c), einen hohlkörperförmigen Abschnitt (1a', 1b', 1c') umfasst.

3. Dichtung nach Anspruch 1 oder 2, **dadurch gekennzeichnet, dass** die Dichtung (1) in einem ersten entspannten Zustand im Querschnitt U-förmig ist und die Dimension des Raums (1d) zur Aufnahme eines Körpers in einem zweiten gespannten Zustand durch elastische Verformung der Dichtung (1) verkleinerbar ist.

4. Dichtung nach Anspruch 3, **dadurch gekennzeichnet, dass** die elastische Verformung der Dichtung (1) durch Druckausübung auf Auflagebereiche (1a1, 1a2) des mittleren Abschnitts (1a) der Dichtung (1) erfolgen kann.

5. Dichtung nach einem der Ansprüche 1 bis 4, **dadurch gekennzeichnet, dass** die Dichtung (1) aus einem elastomeren Material aufgebaut ist, vorzugsweise einem thermoplastischen Polyurethan-Elastomer.

6. Dichtanordnung, **dadurch gekennzeichnet, dass** mindestens zwei Dichtungen (1) gemäss einem der Ansprüche 1 bis 5 über ein Eckstück (3) miteinander verbunden sind.

7. Dichtanordnung nach Anspruch 6, **dadurch gekennzeichnet, dass** vier Dichtungen (1) gemäss einem der Ansprüche 1 bis 5 über Eckstücke (3) unter Ausbildung eines Rahmens miteinander verbunden sind.

8. Siebrahmen (4), umfassend eine Dichtung (1) gemäss einem der Ansprüche 1 bis 5 oder eine Dichtanordnung gemäss einem der Ansprüche 6 oder 7.

9. Siebrahmen nach Anspruch 8, **dadurch gekennzeichnet, dass** die Dichtung (1) oder die Dichtanordnung auf mindestens einem Aussenprofil (5) des Siebrahmens angeordnet ist.

10. Siebrahmen nach Anspruch 8 oder 9, **dadurch gekennzeichnet, dass** eine Dichtanordnung gemäss Anspruch 7 auf allen Aussenprofilen (5) einer Seite des Siebrahmens (4) angeordnet ist.

11. Siebrahmen nach einem der Ansprüche 8 bis 10, **dadurch gekennzeichnet, dass** die Dichtung (1) oder die Dichtanordnung auf einem oder mehreren Profilen (2) angeordnet ist, welche auf mindestens einem Aussenprofil (5) des Siebrahmens (4) bereitgestellt ist.

12. Sieb, vorzugsweise Plansichter, umfassend mindestens einen, vorzugsweise mindestens zwei übereinander angeordnete, Siebrahmen (4) gemäss einem der Ansprüche 8 bis 11.

13. Verfahren zur Montage einer Dichtung (1) gemäss einem der Ansprüche 1 bis 5 oder einer Dichtanordnung gemäss einem der Ansprüche 6 oder 7 auf einem Siebrahmen (4), umfassend die Schritte:
c) Aufbringen der Dichtung (1) oder der Dichtanordnung auf mindestens einem Aussenprofil (5) des Siebrahmens (4), wobei sich die Dichtung (1) oder die Dichtanordnung in einem ersten entspannten Zustand befindet,
d) elastische Verformung der Dichtung (1) oder der Dichtanordnung zu einem zweiten gespannten Zustand.

14. Verfahren nach Anspruch 13, **dadurch gekennzeichnet, dass** in Schritt b) eine Verspannung in einem Stapel aus mindestens zwei Siebrahmen (4) durchgeführt wird.

15. Verfahren nach Anspruch 13 oder 14, **dadurch gekennzeichnet, dass** die Dichtung (1) oder die Dichtanordnung in Schritt b) eine Hubbewegung ausführt.
